# EUROPEAN PATENT APPLICATION

(11) **EP 1 538 726 A1**
(43) Date of publication of application: **08.06.2005**
(21) Application number: 02765503.4
(22) Date of filing: 12.09.2002
(51) Int. Cl.: H02J 17/00

(54) **RECEIVING DEVICE, DISPLAY DEVICE, POWER SUPPLY SYSTEM , DISPLAY SYSTEM, AND RECEIVING METHOD**

(71) Applicant: MITSUBISHI DENKI KABUSHIKI KAISHA, Tokyo 100-8310 (JP)
(72) Inventor: TAKAYAMA, Hisanobu, Chiyoda-ku, Tokyo 100-8310 (JP); MIKAMI, Izumi, Chiyoda-ku, Tokyo 100-8310 (JP)
(74) Representative: Hackett, Sean James
(86) International application number: PCT/JP2002/009341
(87) International publication number: WO 2004/025805

(57) **Abstract**

Application of power transmitting technique by a microwave is disclosed. A multiplicity of electric power receiving patch devices (3000) is stuck on an electric power receiving vest (2200). The electric power receiving patch device (3000) converts the microwave transmitted from a base station (100) directly into an electric current, and supplies the electric current converted to a portable information terminal (1100). Since the portable information terminal (1100) operates using electric power transmitted by radio, the portable information terminal (1100) does not require a battery and a charger.

## Description

### Technical Field

This invention relates to an electric power supplying system which does not require a battery.

### Background Art

In recent years, a portable information type terminal, cellular phone, etc. have become more popular among individuals.

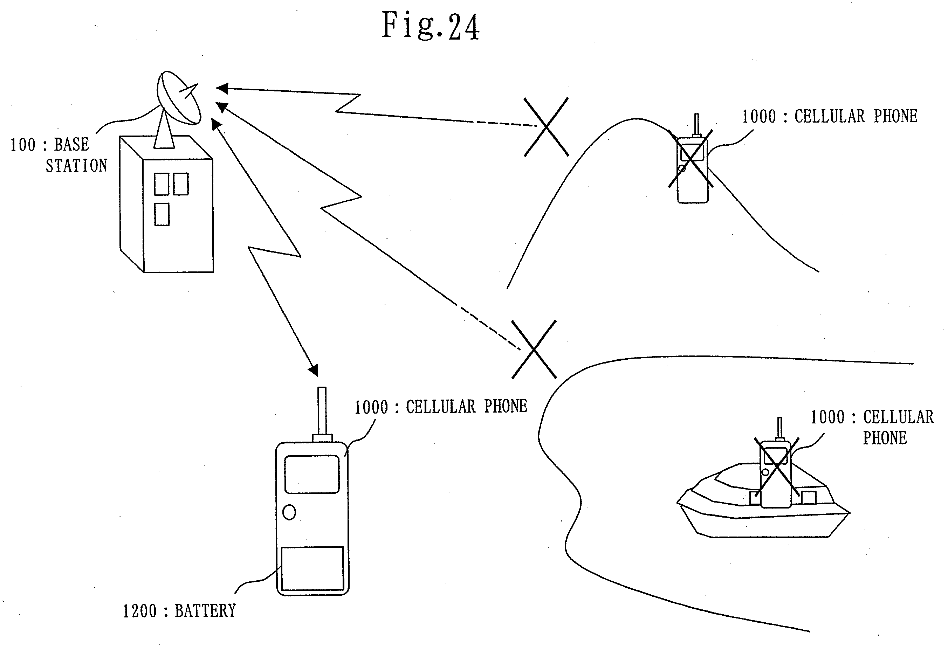

Fig. 24 illustrates a radio information communication system using a cellular phone according to a related art. A cellular phone 1000 can communicate with other equipment by radio through a base station 100. In the related art, when the cellular phone 1000 communicates with the other equipment, electric power is supplied to the electronic equipment such as the cellular phone 1000 from a battery (primary battery, and secondary battery)

However, when the electric power is supplied in this method, it is required to change the battery or charge a battery 1200 illustrated in Fig. 24 after a certain period.

Therefore, the electronic equipment such as the cellular phone 1000 is not suitable for being used continuously for long time or being used in a disaster or in a mountain, etc. Specifically, in the present, it is impossible to use the cellular phone 1000 for the long time without changing or charging the battery. At a location which a radio wave is hard to reach, such as the mountain, or when a normal communication channel is destroyed in an emergency such as disaster, the electronic equipment such as the cellular phone 1000 cannot receive electric power supply continuously. Therefore, normal communication becomes impossible.

Further, in an electric power supply method in the present, there are limitations in size reduction and weight reduction of the cellular phone 1000 and the portable information terminal due to volume occupied by the battery according to the related art and physical volume and weight of an AC-DC converter.

This invention intends to promote batteryless electronic equipment.

### Disclosure of the Invention

An electric power receiving device according to this invention includes an electric power receiving unit for receiving a microwave, a microwave converting unit for converting the microwave received by the above electric power receiving unit into an electric current, and a connecting unit connected to other equipment, for supplying the electric current converted by the above microwave converting unit to the other equipment connected.

Further, the above connecting unit is connected mutually detachable and the above electric power receiving device is arranged in an array.

Further, the electric power receiving device also includes a transmitting unit for transmitting information using the electric current converted by the above microwave converting unit.

Further, the electric power receiving also includes a storing unit for storing identification information, and an electric current converting unit for converting the identification information stored in the above storing unit into a microwave using the electric current converted by the above microwave converting unit, wherein the above transmitting unit transmits the microwave converted by the above electric current converting unit using the electric current converted by the above microwave converting unit.

A display device according to this invention includes an electric power receiving unit for receiving a microwave, a microwave converting unit for converting the microwave received by the above electric power receiving unit into an electric current, a light emitting diode for emitting light using the electric current, and a display unit for making the above light emitting diode emit light using the electric current converted by the above microwave converting unit.

Further, the display device also includes a frequency filter for allowing a passage of the microwave at a determined frequency in microwaves received by the above electric power receiving unit, wherein the above microwave converting unit converts the microwave passed through the above frequency filter into an electric current.

Further, the display device includes a plurality of frequency filters, and a plurality of light emitting diodes for emitting light in various colors, wherein each frequency filter in the above plurality of frequency filters allows a passage of a microwave at a determined frequency set for each frequency filter in the microwaves received by the above electric power receiving unit, wherein the above microwave converting unit converts the microwave passed through each frequency filter in the above plurality of frequency filters into an electric current, wherein the above display unit makes a light emitting diode corresponding to a frequency of the microwave passed through the above each frequency filter in the above plurality of light emitting diodes emit light using the electric current converted by the above microwave converting unit.

A receiving antenna according to this invention includes a solar battery cell for acquiring solar light from energy input, and a microwave receiving antenna for acquiring a microwave from the energy input.

An electric power receiving device according to this invention includes a receiving antenna for acquiring a microwave and solar light, an electric power receiving unit for receiving the microwave acquired by the above receiving antenna, a light receiving unit for receiving the solar light acquired by the above receiving antenna, a microwave converting unit for converting the microwave received by the above electric power receiving unit into an electric current, and a solar light converting unit for converting the solar light received by the above light receiving unit into an electric current.

An electric power supply system according to this invention includes an electric power transmitting device including an energy converting unit for converting energy into a microwave and an electric power transmitting unit for transmitting the microwave converted by the above energy converting unit, and an electric power receiving device including an electric power receiving unit for receiving the microwave transmitted by the above electric power transmitting unit, a microwave converting unit for converting the microwave received by the above electric power receiving unit into an electric current, and a connecting unit connected to other equipment, for supplying the electric current converted by the above microwave converting unit to the other equipment connected.

A display system according to this invention includes an electric power transmitting device including a display control unit for controlling a request for outputting a microwave, an energy converting unit for converting energy into a microwave based on the request for outputting the microwave controlled by the above display control unit, and an electric power transmitting unit for transmitting the microwave converted by the above energy converting unit, and a display device including an electric power receiving unit for receiving the microwave transmitted by the above electric power transmitting unit, a microwave converting unit for converting the microwave received by the above electric power receiving unit into an electric current, a light emitting diode for emitting light using the electric current, and a display unit for making the above light emitting diode emit light using the electric current converted by the above microwave converting unit.

An electric power supply system according to this invention includes an electric power transmitting device including an energy converting unit for converting energy into a microwave, and an electric power transmitting unit for transmitting the microwave converted by the above energy converting unit, and an electric power receiving device including a receiving patch antenna for acquiring the microwave transmitted by the above electric power transmitting unit and solar light which is natural light, an electric power receiving unit for receiving the microwave acquired by the above receiving patch antenna, a light receiving unit for receiving the solar light acquired by the receiving patch antenna, a microwave converting unit for converting the microwave received by the electric power receiving unit into an electric current, and a solar light converting unit for converting the solar light received by the light receiving unit into an electric current.

An electric power receiving method according to this invention includes receiving a microwave, converting the above microwave received into an electric current, and by being connected to other equipment, supplying the electric current converted by the above microwave converting unit to the other equipment connected.

### Brief Description of the Drawings

Fig. 1 illustrates an electric power supply system of Embodiment 1.
Fig. 2 illustrates a system for converting a microwave into energy.
Fig. 3 shows an internal configuration chart of the base station 100.
Fig. 4 shows an internal configuration chart of an electric power receiving patch device 3000.
Fig. 5 shows a connection chart of a plurality of electric power receiving patch devices 3000.
Fig. 6 shows an internal configuration chart of the electric power receiving patch device 3000 to which a transmitting unit 3060 is added.
Fig. 7 illustrates a lost person searching system of Embodiment 2.
Fig. 8 shows an internal configuration chart of an electric power receiving card 1400 and a searching vehicle.
Fig. 9 illustrates a display of Embodiment 3.
Fig. 10 shows an internal configuration chart of an electric power transmitting device 400.
Fig. 11 shows an internal configuration chart of a display device 5100.
Fig. 12 shows an internal configuration chart of the electric power transmitting device 400.
Fig. 13 shows a flow chart for determining a frequency
Fig. 14 shows an internal configuration chart of the display device 5100.
Fig. 15 shows an internal configuration chart of the electric power transmitting device 400.
Fig. 16 shows an internal configuration chart of the display device 5100.
Fig. 17 illustrates a traffic safety system of Embodiment 4.
Fig. 18 illustrates an electric power supply system in a building of Embodiment 5.
Fig. 19 shows a configuration chart of a receiving patch antenna for acquiring solar light and the microwave.
Fig. 20 shows a structure diagram of a solar battery.
Fig. 21 illustrates a microwave receiving antenna pattern.
Fig. 22 illustrates the microwave receiving antenna pattern.
Fig. 23 shows an internal configuration chart of the electric power receiving patch device.
Fig. 24 illustrates a radio information communication system using a cellular phone according to the related art.

### Best Mode for Carrying out the Invention

### Embodiment 1.

In this embodiment, a method for constructing a batteryless society by transmitting electric power by radio is explained.

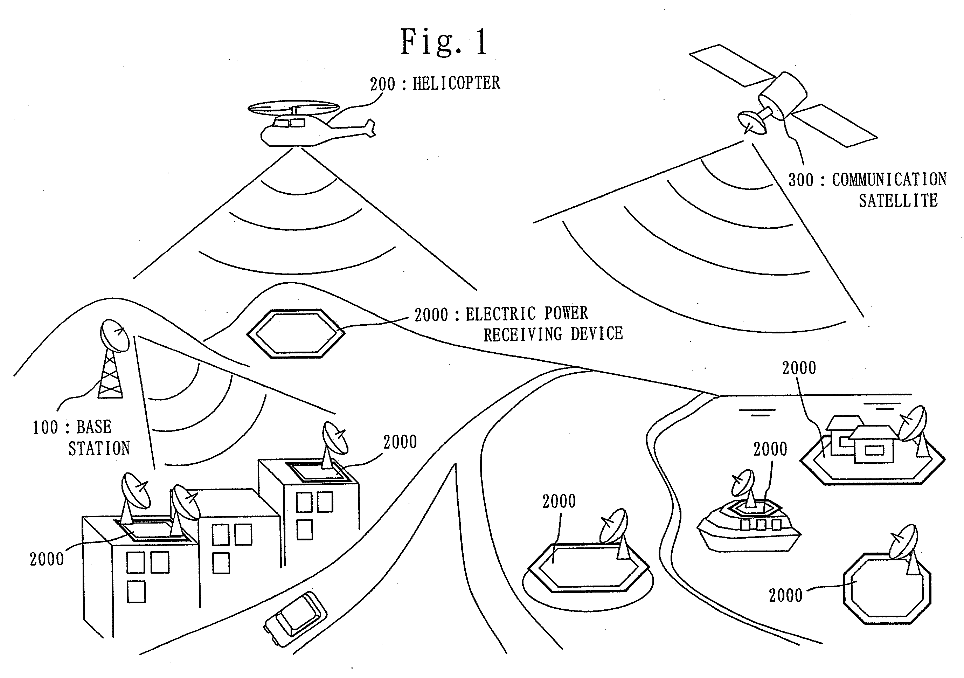

Fig. 1 illustrates an electric power supply system for supplying electric power from a transmitting device to a receiving device.

In Fig. 1, the base station 100, a helicopter 200, and a communication satellite 300 are examples of electric power transmitting devices. The helicopter 200 and the communication satellite 300 radiate a microwave from a sky through space. For example, as for the communication satellite 300, the method that a single satellite radiates the microwave can be thought as illustrated in Fig. 1. Or, the method that a multiplicity of satellites (around 25 to 50 satellites) arranged in an array radiates and scatters the microwave thinly to a large area instead of concentrating to a certain area, can be thought.

The base station 100 is installed on ground, and the base station 100 radiates the microwave. In Fig. 1, the base station 100 radiates the microwave using a directional antenna such as an adaptive alley antenna. All of electric power transmitting devices can radiate the microwave using the directional antenna, or radiate the microwave using a nondirectional antenna.

In Fig. 1, 2000 denotes an electric power receiving device. The electric power receiving device 2000 can be installed in any place, e.g., a roof of a building or a dome, a part of a mountain, a part of a boat, a part of ocean, etc. An antenna is set in each electric power receiving device 2000, and the electric power receiving device 2000 acquires the microwave radiated from the electric power transmitting device such as the helicopter 200. The electric power receiving device 2000 has a function of converting the microwave acquired directly into an electric current. Therefore, the electric power receiving device 2000 receives energy directly from the electric power transmitting device such as the helicopter 200, and while the electronic equipment is operating, the electric power receiving device 2000 converts the energy received into the electric current continuously, and the electronic equipment operates using the electric power converted. Therefore, it is possible to produce electronic equipment by using the electric power receiving device 2000, which does not require a battery or a charger.

As stated, in a society which has the electric power transmitting device and the electric power receiving device 2000, it is possible to construct a society where the electric power can be drawn in any area by receiving the microwave radiated from the electric power transmitting device at the electric power receiving device 2000 and used immediately. Especially, there is a remarkable effect when the electric power receiving device 2000 extracts and supplies required electric power immediately in mountains or on the ocean where infrastructure is not good, or in an emergency due to a disaster, etc.. Therefore, it is possible to create new concept electronic device and new service.

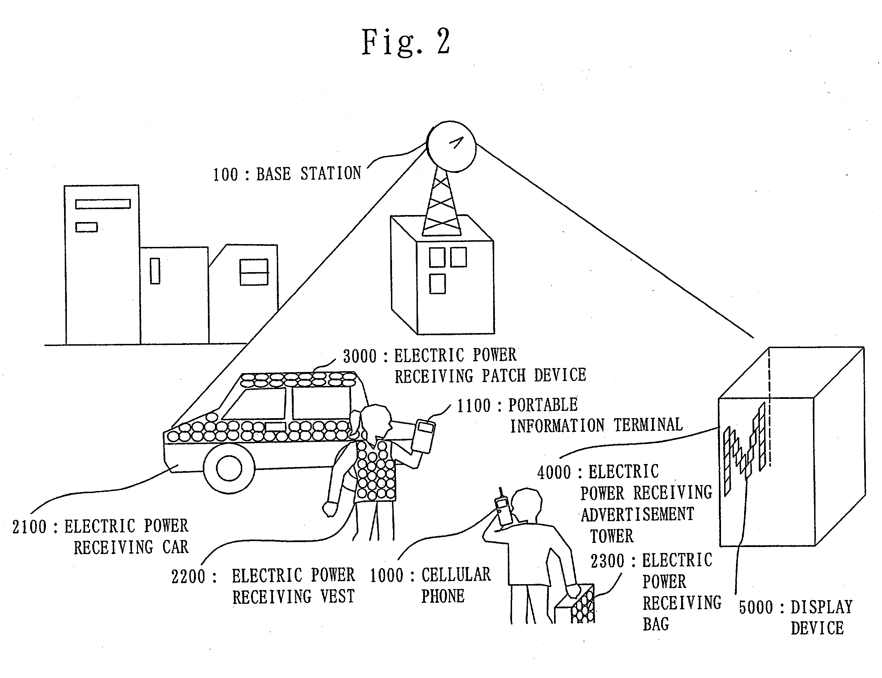

Fig. 2 illustrates an example of an electric power supply system for receiving the microwave radiated directly from the base station 100 and efficiently converting the microwave into the energy.

Besides the base station 100 illustrated in Fig. 2, the helicopter 200 and the communication satellite 300 can be used as the electric power transmitting device as in Fig. 1. The most appropriate electric power transmitting means can be adopted accordingly in each situation.

An electric power receiving car 2100 is a car with a multiplicity of electric power receiving patch devices 3000 stuck on or embedded in a body of the car, which converts the microwave received using the electric power receiving patch devices 3000 directly into the electric current and uses the electric current. Specifically, a plurality of electric power receiving patch devices 3000 attached to the electric power receiving car 2100 receives a specific electromagnetic wave such as the microwave radiated from the base station 100, and converts energy of the microwave received directly into the electric current. In this way, the electric power receiving car 2100 which has received supply of the electric power uses the electric current converted directly when the electric power receiving car 2100 passes an ETC system (ELECTRONIC TOLL COLLECTION: NONSTOP AUTOMATIC TOLL COLLECTION SYSTEM) for example. Accordingly, it becomes possible to pay the toll later.

The electric power receiving patch device 3000 illustrated in Fig. 2 is an electric power receiving device in a shape of a patch, and the electric power receiving patch device 3000 is an example of the electric power receiving device illustrated in Fig. 1. Specifically, the electric power receiving device illustrated in Fig. 1 is a device in which the single or plurality of electric power receiving patch devices 3000 is arranged. The electric power receiving patch device 3000 illustrated in Fig. 2 can be formed in various shapes, e.g., circle or square about in a size of an electric power transmitting antenna 500 yen coin, etc.. There is also a method of using the electric power receiving patch device 3000 by stickerizing a back side of the electric power receiving patch device 3000 and sticking the electric power receiving patch device 3000 to various products.

An electric power receiving vest 2200 and an electric power receiving bag 2300 are a vest and a bag with the electric power receiving patch devices 3000 stuck on or embedded in like the electric power receiving car 2100. A woman wearing the electric power receiving vest 2200 makes a portable information terminal 1100 operate using the electric current converted by the electric power receiving patch device 3000 in the electric power receiving vest 2200. In this way, the woman communicates by radio using the portable information terminal 1100 which does not require the battery and the charger. It is also possible that a function of receiving the electric power is added to the portable information terminal 1100 by sticking the electric power receiving patch device 3000 to the portable information terminal 1100 itself, and the portable information terminal 1100 itself converts the microwave radiated from the base station 100 into the electric current and communicates using the electric current converted.

The plurality of electric power receiving patch devices 3000 is attached to the electric power receiving bag 2300 like the electric power receiving vest 2200. A man illustrated in the figure makes the cellular phone 1000 operate using the electric current converted by the electric power receiving patch device 3000 like the above-stated woman.

As stated, by receiving the microwave from the base station 100 which radiates the energy, converting the energy received directly into the electric current, and using the electric current, it is possible to create the new concept electronic equipment such as the cellular phone 1000 and the portable information terminal 1100 which are batteryless.

In the electric power supply system of this embodiment, it is possible to stick a display device 5000 to a side of a building as illustrated in Fig. 2 and change the building to an electric power receiving advertising tower 4000. The display device 5000 is the electric power receiving patch device 3000 with a function of emitting light. The electric power receiving advertising tower 4000 includes a single or plurality of display devices 5000. The display device 5000 converts the microwave received directly into the electric current, and emits light using the electric current converted. Specifically, in the electric power receiving advertising tower 4000, a character and a picture are represented using the single or plurality of display devices 5000 modulized. Besides being used as a display as illustrated in the figure, the display device 5000 can be used as a batteryless light emitting display board at a place where it is convenient if the battery does not need to be changed, such as a display board at an emergency exit.

As stated, the display device 5000 can be used as a batteryless display. Therefore, by using the display device 5000, the display can be easily constructed even at a place where it is difficult to obtain an electric power source. In the display according to the related art, construction works of the electric power source for supplying the electric power, a cable for connecting the display and the electric power source, etc. were required. However, in the display using the display device 5000, these complicated preparation and tools are not required.

Further, since the display device 5000 does not need an electric power source device itself, it is possible to reduce weight of the display device 5000 itself. Therefore, by using the display device 5000, a display can be created on a building and in space where the display could not be created according to the related art. Details of an operation for using the display device 5000 as the display are stated later.

Next, an internal configuration of the base station 100 is explained.

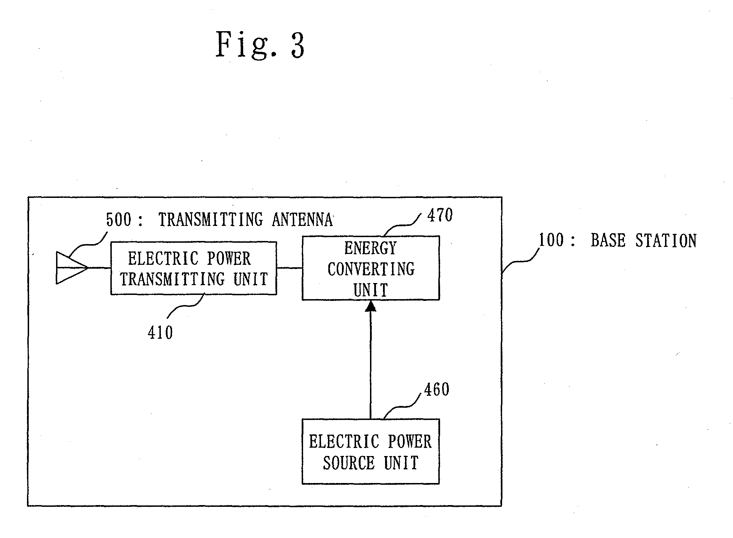

Fig. 3 is an internal configuration chart of the base station 100.

An electric power source unit 460 supplies energy to an energy converting unit 470, and the energy converting unit 470 converts the energy supplied into the microwave. An electric power transmitting unit 410 radiates the microwave converted to space through a transmitting antenna 500. Basically, all of the electric power transmitting devices such as the helicopter 200 and the communication satellite 300 have an internal configuration as illustrated in Fig. 3. The energy supplied by the electric power source unit 460 is not limited to the electric current, and the energy includes solar energy, geothermal energy, etc.

Next, an internal configuration of the electric power receiving patch device 3000 is explained.

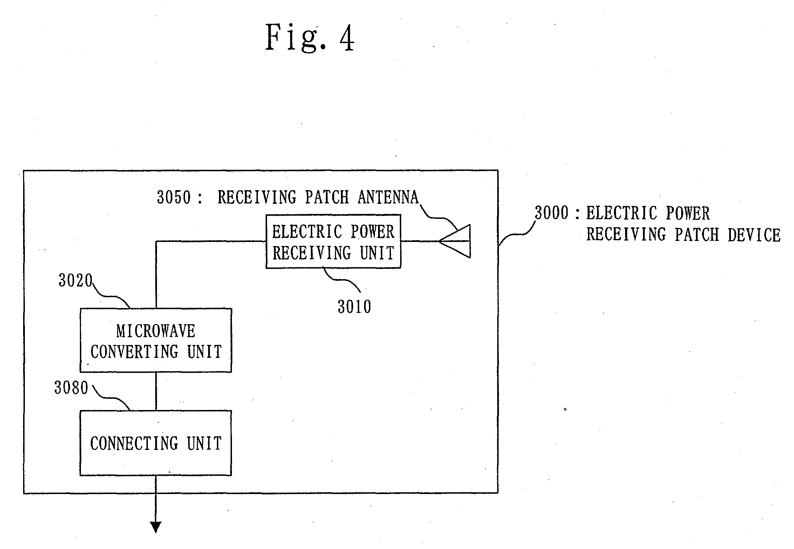

Fig. 4 is an internal configuration chart of the electric power receiving patch device 3000.

A receiving patch antenna 3050 acquires the microwave radiated from the electric power transmitting device to space, and an electric power receiving unit 3010 receives the microwave acquired by the receiving patch antenna 3050. The receiving patch antenna 3050 is an example of a receiving antenna. A microwave converting unit 3020 rectifies the microwave received by the electric power receiving unit 3010 and converts the microwave into a direct current. A connecting unit 3080 is connected to other equipment, and the electric current converted by the above microwave converting unit is supplied to the other equipment connected. In this way, the electric power receiving patch device 3000 can receive the microwave radiated directly from the base station 100.

The single electric power receiving patch device 3000 can be formed about in a size of 500 yen coin with a thickness of about 1 - 2 cm. Therefore, as illustrated in Fig. 2, the electric power receiving patch device 3000 can be attached to clothes and a bag. In addition to a field of information, medicine, and traffic safety, a new product such as the electric power receiving car 2100 and the electric power receiving vest 2200 can be produced in all of the fields such as clothes, furniture and advertisement. Hence, it is possible to create demand in Japan and further contribute to development of industries in Japan.

Further, the single electric power receiving patch device 3000 can output a several tens mW. Therefore, by modulizing the electric power receiving patch devices 3000, and connecting the plurality of electric power receiving patch devices 3000 modulized in an array each other by the connecting unit 3080, the plurality of electric power receiving patch devices 3000 connected can function as device for outputting high energy which is a several hundreds mW or more. Further, all the plurality of electric power receiving patch devices 3000 connected in this way can be attached and detached freely.

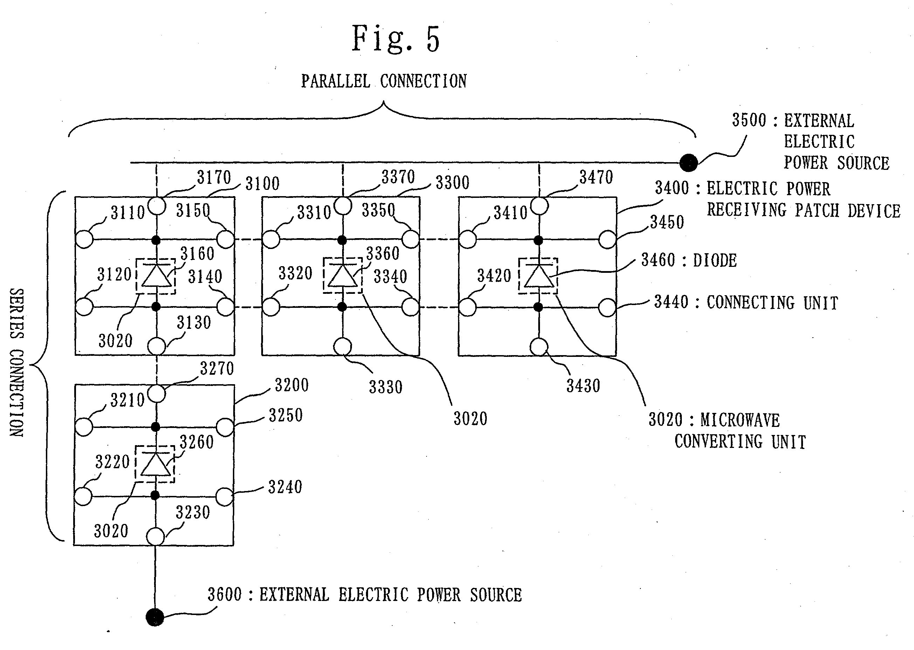

In Fig. 5, the plurality of electric power receiving patch devices 3000 modulized is connected in an array.

3100, 3200, 3300, and 3400 denote electric power receiving patch devices modulized. 3160, 3260, 3360, and 3460 in the microwave converting unit 3020 denote diodes for rectifying the microwave and converting the microwave into a direct current. In Fig. 5, the receiving patch antenna 3050 and the electric power receiving unit 3010 illustrated in Fig. 4 are omitted.

The electric power receiving patch device 3100 and the electric power receiving patch device 3200 are connected in series by a connecting unit 3130 and a connecting unit 3270. The electric power receiving patch device 3100 and the electric power receiving patch device 3200 can output the electric current converted to an outside using an external electric power source 3500 connected to a connecting unit 3170 or an external electric power source 3600 connected to a connecting unit 3230.

As stated, by connecting the plurality of electric power receiving patch devices modulized in series, it becomes possible to output energy which is higher than the electric power converted by the single electric power receiving patch device.

The electric power receiving patch device 3100, the electric power receiving patch device 3300, and the electric power receiving patch device 3400 are connected by at least one of a connecting unit 3150 and a connecting unit 3310, a connecting unit 3350 and a connecting unit 3410, a connecting unit 3140 and a connecting unit 3320, a connecting unit 3340 and a connecting unit 3420.

As stated, the plurality of electric power receiving patch devices connected in parallel is connected to the external electric power source 3500 by at least one of the connecting unit 3170, a connecting unit 3370, and a connecting unit 3470, and the plurality of electric power receiving patch devices can supply the electric power to an outside.

As stated, by connecting the plurality of electric power receiving patch devices in parallel, it is possible to suppress consumption of the electric current compared with a case of using the single electric power receiving patch device.

The portable information terminal 1100 illustrated in Fig. 2 operates in a following way.

The portable information terminal 1100 is connected by cable, e.g., a cable, etc. or by radio to the external electric power source 3500 or the external electric power source 3600 connected to the plurality of electric power receiving patch devices 3000. The electric power receiving patch devices 3000 catches the microwave scattered from the air, and converts the microwave into the direct current. The electric power receiving patch device 3000 transmits the electric current converted to the portable information terminal 1100 through the external electric power source 3500 or the external electric power source 3600. The portable information terminal 1100 operates using the electric current transmitted continuously from the electric power receiving patch device 3000 as the electric power source. As stated, the electric power for operating the portable information terminal 1100 can be supplied from the electric power receiving patch device 3000 to the portable information terminal 1100 continuously while the portable information terminal 1100 itself is operating. Therefore, in a batteryless society where the electric power receiving patch device 3000 illustrated in this embodiment is used, the electronic equipment such as the portable information terminal 1100 can be configured without requiring the battery and the charger.

Further, it is also possible that a function of the electric power receiving patch device 3000 is added to the portable information terminal 1100 itself, the microwave is converted into the electric current by the portable information terminal 1100 itself, and the portable information terminal 1100 operates using the electric current converted.

Next, a case of adding a transmitting unit to the electric power receiving patch device 3000 illustrated in Fig. 4 is explained.

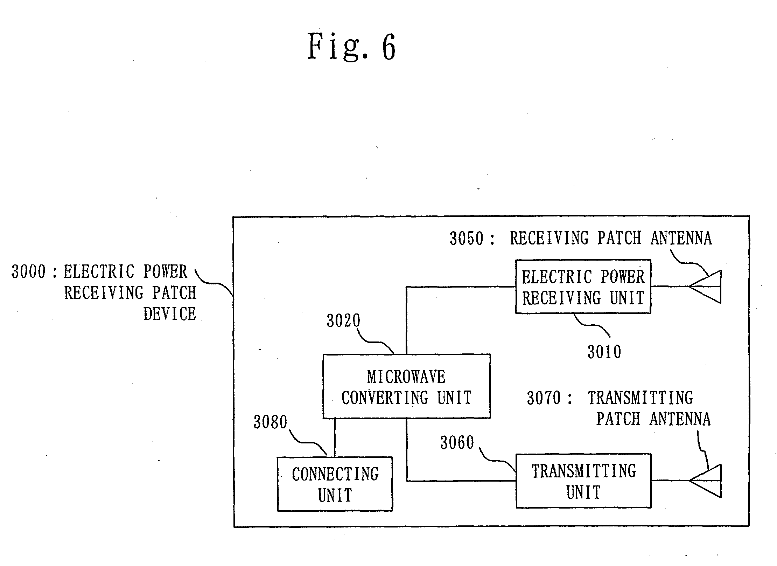

Fig. 6 is an internal configuration chart of the electric power receiving patch device 3000 to which the transmitting unit 3060 and a transmitting patch antenna 3070 are added.

The transmitting unit 3060 can transmit data to other electronic equipment through the transmitting patch antenna 3070 using the electric current converted by the microwave converting unit 3020.

As stated, based on microwave application technique, communication technique, semiconductor technique, etc., an electric power transmitting device such as the base station 100 converts the electric power into the microwave, radiates the microwave converted to space, and transmits the microwave by radio. The electric power receiving patch device 3000 receives the microwave transmitted by radio, and converts the microwave directly into energy efficiently.

As stated, since the energy transmitted in space is converted directly into the electric power which can be used in an electric power receiving side, and the cellular phone 1000, etc. is operated using the electric power converted, it is possible to make the cellular phone 1000, etc. batteryless. Therefore, it is possible to produce a product which reduces weight and size of the electronic equipment such as the cellular phone 1000.

Further, in all fields, a new product which can convert the microwave directly into the energy can be created , such as clothes, furniture, and advertisement to which the electric power receiving patch device 3000 is attached.

Further, it is possible to send a new market for building a necessary infrastructure such as a transmitting station (a system equivalent to the base station 100 and an electric power transmitting satellite system for transmitting from outer space) for these, service, etc.

For configuring the electric power supply system illustrated in this embodiment, it is possible to utilize overall technique of companies, such as electric power, electrical appliance, communication, semiconductor, and space. It is possible to activate a business and create a new business with cooperation of businesses.

### Embodiment 2.

In this embodiment, a lifesaving and lost person searching system using an electric power receiving card as batteryless electronic equipment is explained.

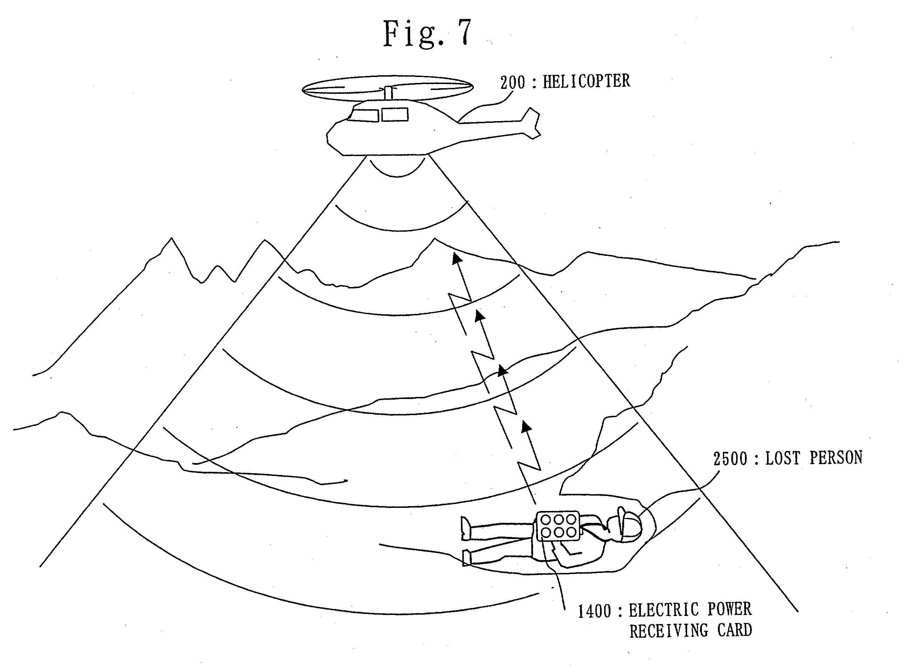

Fig. 7 illustrates a lost person searching system of this embodiment.

The helicopter 200 illustrates in Fig. 7 is an example of a searching vehicle for searching the lost person. The helicopter 200 has a transmitter which radiates the microwave. The helicopter 200 flies radiating the microwave from the transmitter.

A lost person 2500 hangs the electric power receiving card 1400 around his/her neck. The electric power receiving card 1400 is an example of a batteryless electric power receiving device, and the electric power receiving card 1400 also function as a sender. When radio energy radiated from the helicopter 200 is received by the electric power receiving card 1400 held by the lost person 2500, the electric power receiving card 1400 converts the microwave transmitted from the helicopter 200 into the direct current, operates using the electric current, and sends a recognition signal or a rescue signal to the helicopter 200.

The helicopter 200 can know a position of the lost person 2500 by receiving the recognition signal or the rescue signal from the electric power receiving card 1400.

As stated, in a searching system of this embodiment, the lost person who is in woods or in snow can be found easily using the electric power supplied by the helicopter 200.

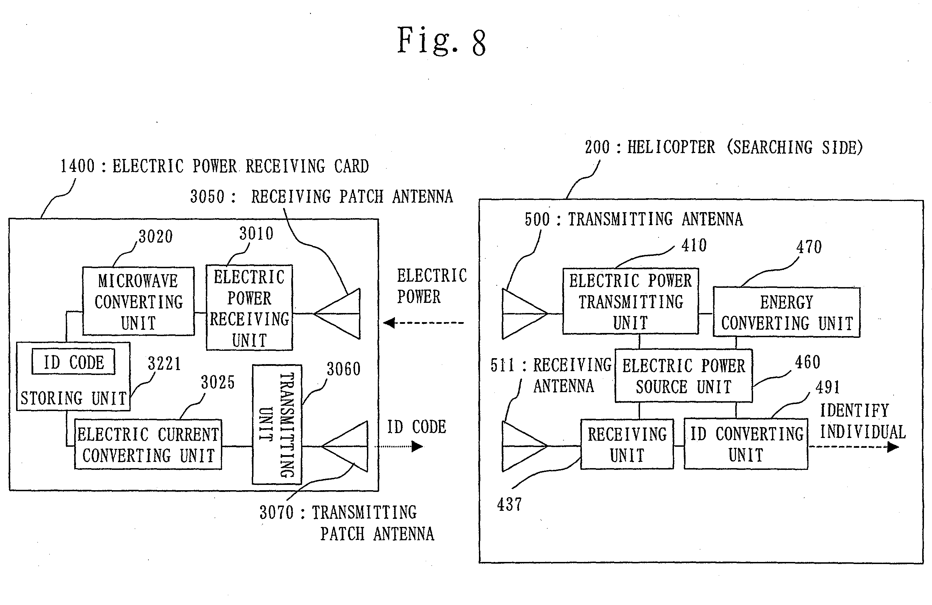

Fig. 8 illustrates an internal configuration of the electric power receiving card 1400 and the helicopter 200 (searching vehicle).

First, an operation of the helicopter 200 is explained. The energy converting unit 470 in the helicopter 200 converts energy such as the electric current supplied by an electric power source unit 460 into the microwave, and the electric power transmitting unit 410 radiates the microwave converted to space through the transmitting antenna 500.

Next, an operation of the electric power receiving card 1400 is explained. The receiving patch antenna 3050 acquires the above microwave radiated to space. The microwave acquired is received by the electric power receiving unit 3010. A storing unit 3221 stores an ID code as its own identification information. One-to-one correspondence between this ID code and a climber has been made before mountain climbing. Therefore, the ID code is a code unique to each climber.

The microwave converting unit 3020 converts the above microwave received into the direct current, and the electric power receiving card 1400 operates using the electric current converted. Specifically, an electric current converting unit 3025 in the electric power receiving card 1400 modulates the ID code stored in the storing unit 3221 using the electric current converted, and converts the ID code modulated into the microwave. The transmitting unit 3060 transmits the ID code modulated to the helicopter 200 through the transmitting patch antenna 3070 using the microwave as a carrier wave.

In the helicopter 200, a receiving antenna 511 acquires the microwave. The microwave having the ID code transmitted from the electric power receiving card 1400 is received by a receiving unit 437 through the receiving antenna 511. An ID converting unit 491 demodulates the ID code received, and specifies the lost person 2500 using the ID code demodulated.

As another method for informing the helicopter 200 of the ID code as the identification information by the electric power receiving card 1400, there is a method of assigning frequencies of electromagnetic waves transmitted from the electric power receiving card 1400 to each electric power receiving card 1400 respectively. In this method, the lost person 2500 is specified by identifying a frequency of an electromagnetic wave transmitted from the electric power receiving card 1400.

In this embodiment, the lost person 2500 holds the electric power receiving card 1400. However, it is also possible to construct the lost person searching system of this embodiment by attaching the electric power receiving patch device 3000 to clothes worn by the lost person 2500. It is also possible that the plurality of electric power receiving patch devices 3000 attached to the clothes converts the microwave transmitted from the helicopter 200 into the electric current and converts the microwave transmitted into thermal energy at the same time. In this case, it is also possible to transmit the ID code from the clothes to which the plurality of electric power receiving patch devices 3000 is attached to the helicopter 200 and warm the lost person 2500 himself/herself using the thermal energy supplied by the helicopter 200 at the same time. Therefore, the above lost person searching system can contribute to lifesaving and life extension of the lost person.

The stated lost person searching system can replace an electric power supply system for the disaster and the emergency. In the disaster and the emergency, it will be in chaos on the ground. Therefore, it is effective to search from the sky for saving life. In this case, the helicopter 200 receives a sending signal transmitted by the electric power receiving card 1400 held by a missing person under debris, or in a building, etc. through the above operation. In this way, it is possible to find the missing person at an early stage.

Besides, by attaching the electric power receiving card 1400 to a child or a collar of a dog, etc., it becomes possible to find a lost child and a lost dog at an early stage.

### Embodiment 3.

Next, a display method using the display device 5000 illustrated in Fig. 2 is explained.

### (1) A display emitting light in a fixed color

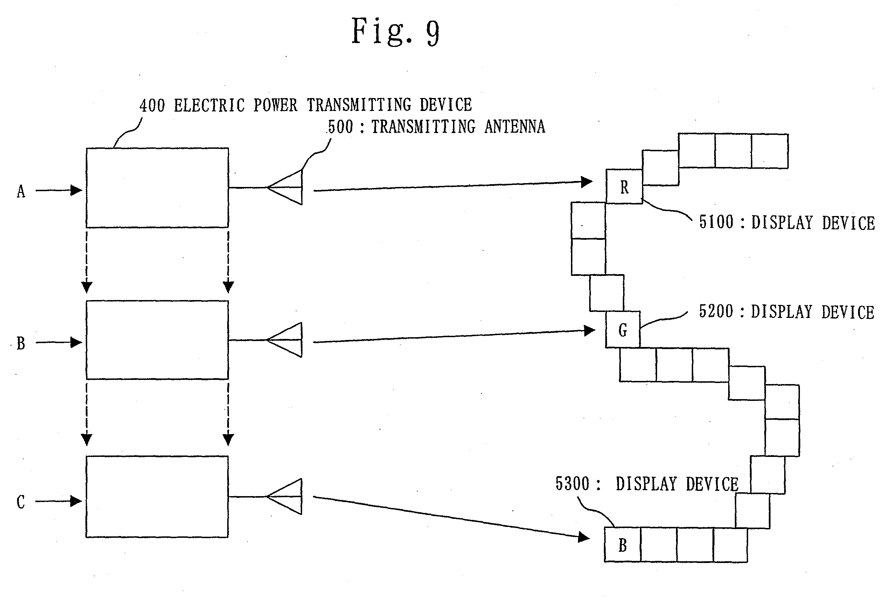

First, a display using a display device emitting light in a fixed color is explained. Fig. 9 illustrates an example of the display using the display device.

400 denotes an electric power transmitting device which transmits the microwave. The transmitting antenna 500 is a directional antenna which radiates the microwave transmitted by the electric power transmitting device 400 to a certain narrowed direction. 5100, 5200, and 5300 denote display devices emitting light in red, green, and blue respectively.

At point A or when directionality of the transmitting antenna 500 is directed to the display device 5100, the electric power transmitting device 400 radiates the microwave through the transmitting antenna 500. By the transmitting antenna 500, the microwave becomes a directional beam, and shoots the display device 5100.

The display device 5100 shot by the beam of the microwave converts the microwave shot into the electric current, and makes a red light emitting diode emit light using the electric current converted. In this way, the display device 5100 can emit in red.

Similarly, the electric power transmitting device 400 radiates the microwave when the electric power transmitting device 400 moves to point B or when directionality of the transmitting antenna 500 is directed to the display device 5200. The display device 5200 radiated converts the microwave into the electric current, and makes green light emitting diode emit light using the electric current converted.

Similarly for the display device 5300, it radiates the microwave when the electric power transmitting device 400 moves to point C or when directionality of the transmitting antenna 500 is directed to the display device 5300. The display device 5300 radiated converts the microwave into the electric current, and makes blue light emitting diode emit light using the electric current converted.

In this way, each display device functions as a module of a display.

Next, an internal configuration and an operation of the above electric power transmitting device 400 and the display device 5100 are explained.

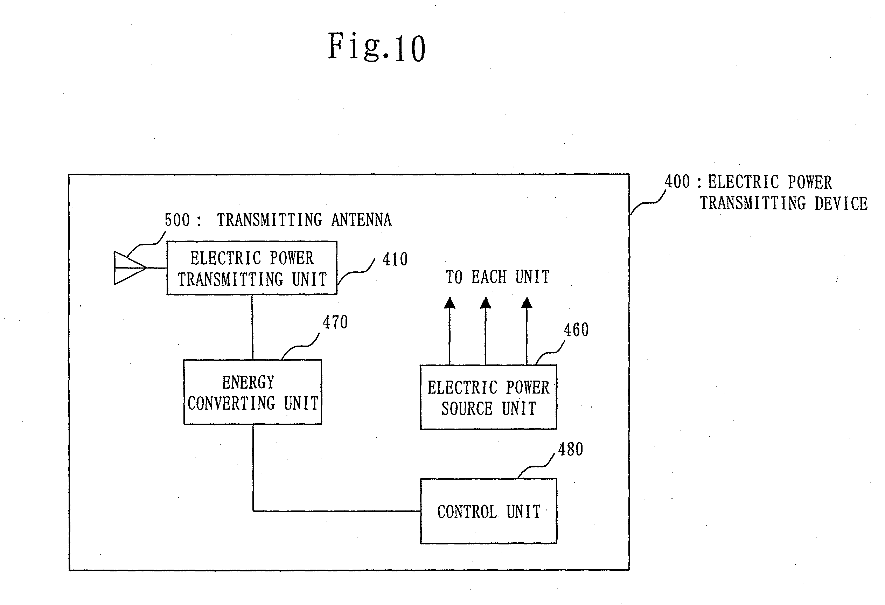

Fig. 10 shows an internal configuration chart of the electric power transmitting device 400.

A control unit 480 is a control unit which controls the display. For a single or a plurality of display devices constituting the display, the control unit 480 controls timing of making each of display devices emit light.

When the electric power transmitting device 400 moves to point A illustrated in Fig. 9, the control unit 480 requests the electric power transmitting device 400 to radiate the microwave to the display device 5100. The energy converting unit 470 receives the above request and converts the energy such as the electric current supplied by the electric power source unit 460 into the microwave. The electric power transmitting unit 410 radiates the microwave converted to the display device 5100 through the transmitting antenna 500.

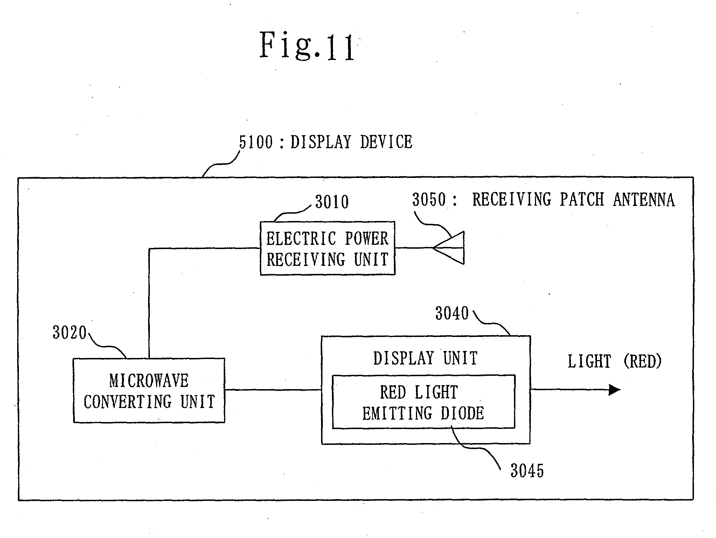

Fig. 11 shows an internal configuration of the display device 5100.

The receiving patch antenna 3050 acquires the microwave radiated by the electric power transmitting device 400, and the electric power receiving device 3010 receives the microwave acquired. The microwave converting unit 3020 converts the microwave received by the electric power receiving unit 3010 into a direct current. A display device 3040 makes a red light emitting diode 3045 emit light using the electric current converted.

In this way, the display device 5100 can issue without requiring own electric power source. Similarly, the display device 5200 and the display device 5300 emit light in green and light in blue.

### (2) A display emitting light in a fixed color by a determined frequency

Next, a display using a display device emitting light in a fixed color when the microwave received has a determined frequency is explained.

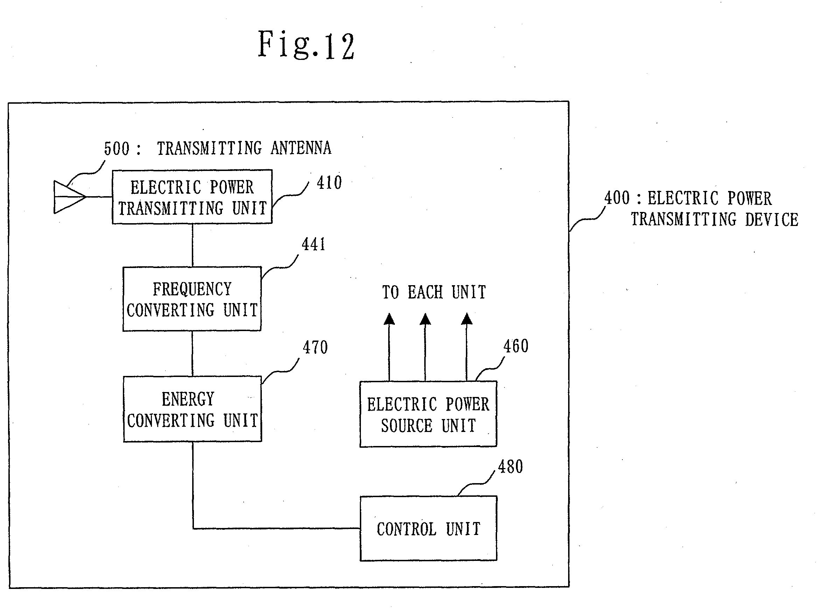

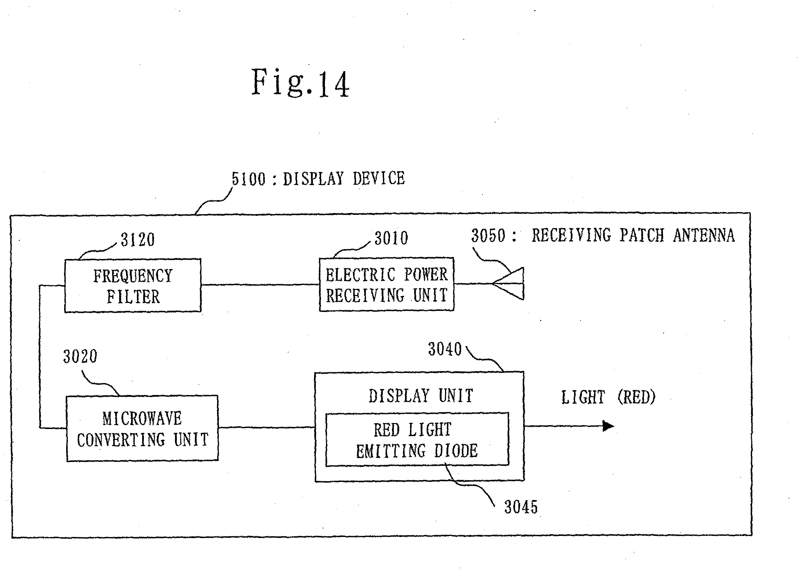

Fig. 12 shows an internal configuration chart of the electric power transmitting device 400 which transmits the microwave at the determined frequency, and Fig. 14 is an internal configuration chart of the display device 5100 which emits light reacting to the microwave at the determined frequency.

In the electric power transmitting device 400 illustrated in Fig. 12, a frequency converting unit 441 is added to the internal configuration of the electric power transmitting device 400 illustrated in Fig. 10.

The control unit 480 controls to select a display device that emits light in a particular color.

The frequency converting unit 441 determines a frequency band of the microwave radiated according to control by the control unit 480, and converts a frequency of the microwave into a determined frequency band using the electric current converted by the microwave converting unit 3020.

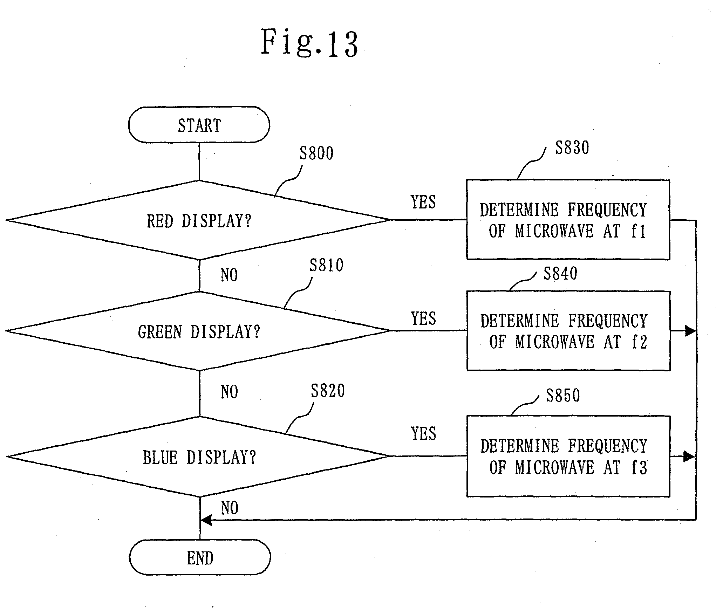

Fig. 13 shows a flow chart that the frequency converting unit 441 determines the frequency band of the microwave radiated according to the control by the control unit 480. when the display is required to emit light in red (S800), the frequency converting unit 441 determines a frequency of the microwave radiated at f1 (S830). When the display is required to emit light in green (S810), the frequency converting unit 441 determines the frequency of the microwave radiated at f2 (S840). When the display is required to emit light in red (S820), the frequency converting unit 441 determines the frequency of the microwave radiated at f3 (S850).

In the display device 5100 illustrated in Fig. 14, a frequency filter 3120 is further added to the internal configuration of the display device 5100 illustrated in Fig. 11. The frequency filter has a function of allowing passage of the microwave at a determined frequency and intercepting the microwave at other frequencies. Therefore, when the microwave received by the electric power receiving unit 3010 has the frequency band of f1, the frequency filter 3120 allows the passage of the microwave. Therefore, when the microwave received has the frequency band of f1, the display device 3040 makes the light emitting diode 3045 emit light in red. Specifically, when the microwave received has the frequency band of f1, the display device 5100 emits light in red.

Meanwhile, when the microwave received by the electric power receiving unit 3010 does not have the frequency band of f1, the frequency filter 3120 intercepts the microwave. Therefore, the light emitting diode 3045 does not emit light.

Similarly to the above operation, when the microwave received has the frequency band of f2, the frequency filter allows passage of the microwave, and the display device 5200 emits light in green. When the microwave received has the frequency band of f3, the frequency filter allows passage of the microwave, and the display device 5300 emits light in blue.

As stated, it is possible to control which display device emits light according to the frequency of the microwave. Therefore, even when it is impossible to narrow the beam of the microwave from the electric power transmitting device 400 appropriately, it is possible to control which display device emits light according to the frequency of the microwave. This enables the electric power transmitting device 400 to operate the display accurately.

### (3) A display emitting light in an arbitrary color by a determined frequency

Next, a display using the display device which emits light in an arbitrary color corresponding to a frequency when the microwave received has a determined frequency.

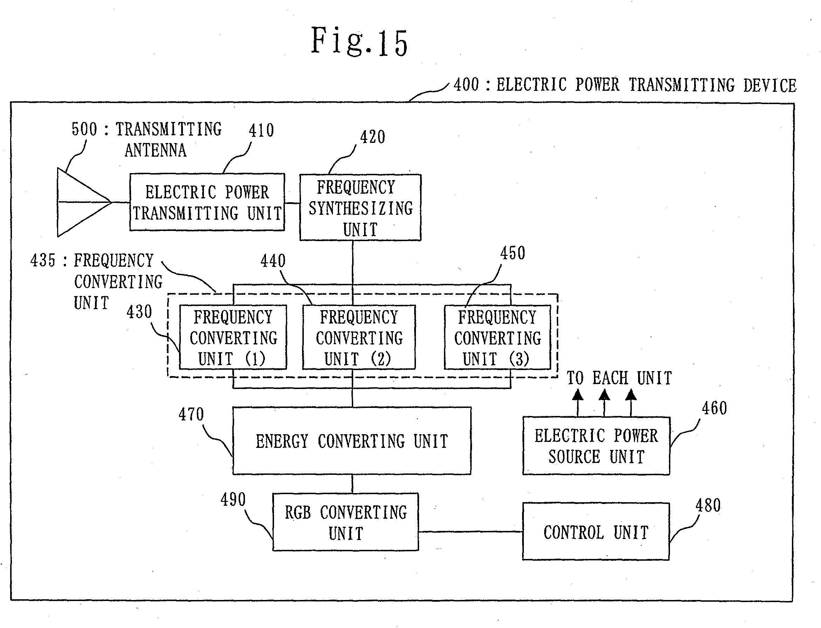

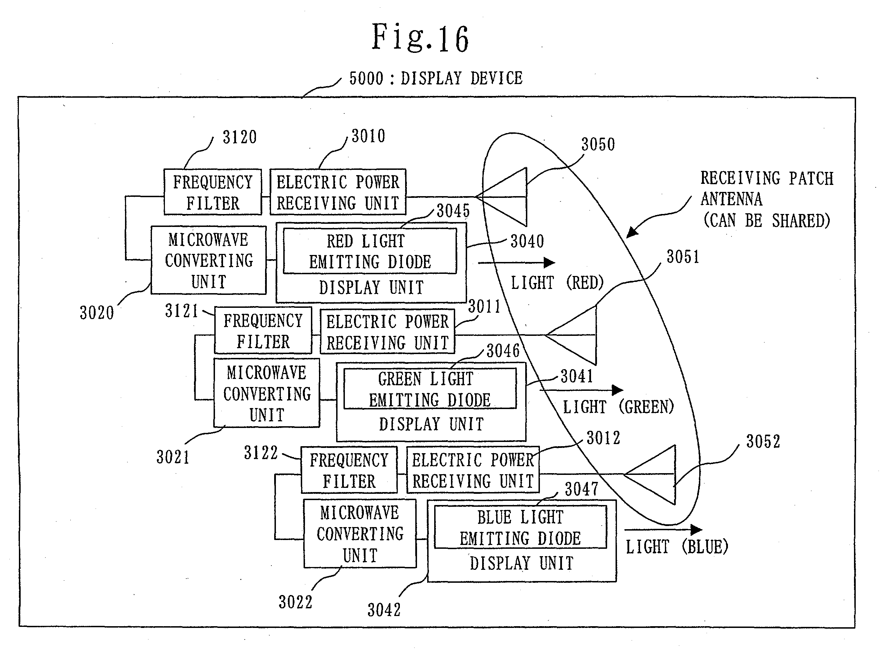

Fig. 15 shows an internal configuration chart of the electric power transmitting device 400 which transmits the microwave at a plurality of determined frequencies. Fig. 16 shows an internal configuration chart of the display device 5000 which emits light in one of R (red), G (green), and B (blue) corresponding to the microwave at the plurality of determined frequencies.

In the electric power transmitting device 400 illustrated in Fig. 15, a RGB converting unit 490 and a frequency synthesizing unit 420 are further added to the internal configuration of the electric power transmitting device 400 illustrated in Fig. 12.

The control unit 480 in this electric power transmitting device 400 controls which display device emits light and in which color. According to the control by the control unit 480, the RGB converting unit 490 makes correspondence between the color of the light emitted from the display device 5000 and the frequency band. For example, when the control unit 480 determines that the display device 5000 emits light in red, the RGB converting unit 490 determines the frequency band at f1. Similarly, when the control unit 480 determines that the display device 5000 emits light in green or blue, the RGB converting unit 490 determines the frequency band at f2 or f3.

The microwave converted by the energy converting unit 470 is converted into a determined frequency by a frequency converting unit 435. The frequency converting unit 435 includes a frequency converting unit (1) 430, a frequency converting unit (2) 440, and a frequency converting unit (3) 450. When the RGB converting unit 490 determines the frequency of the microwave at f1, the frequency band of the microwave is converted into f1 by the frequency converting unit (1) 430. Similarly, when the frequency of the microwave is determined at other frequencies of f2 and f3, the frequency of the microwave is converted into f2 and f3 by the frequency converting unit (2) 440 and the frequency converting unit (3) 450.

The frequency synthesizing unit 420 synthesizes the microwaves converted by the frequency converting unit (1) 430, the frequency converting unit (2) 440, and the frequency converting unit (3) 450 in the frequency converting unit 435 respectively, and the electric power transmitting unit 410 transmits the synthesized microwave through the transmitting antenna 500.

The display device 5000 illustrated in Fig. 16 includes three sets of the internal configuration of the display device 5100 in Fig. 14, and three display units include the red light emitting diode 3045, a green light emitting diode 3046, and a blue light emitting diode 3047 respectively.

The microwave transmitted by the transmitting device 400 is acquired by the receiving patch antenna 3050, a receiving patch antenna 3051, and a receiving patch antenna 3052, and received by the electric power receiving unit 3010, an electric power receiving unit 3011, and an electric power receiving unit 3012. The receiving patch antenna 3050, the receiving patch antenna 3051, and the receiving patch antenna 3052 can be shared.

The frequency filter 3120, a frequency filter 3121, and a frequency filter 3122 allow the passage of the microwave received when the frequency of the microwave received is f1, f2, and f3 respectively.

The microwave converting unit 3020, the microwave converting unit 3021, and the microwave converting unit 3022 converts the microwave passed through the frequency filter into the electric current respectively.

The display device 3040 issues the red light emitting diode 3045 using the electric current converted.

In this way, the red light emitting diode 3045 in the display device 5000 emits the light in red continuously while the electric current is supplied by the microwave converting unit 3020. Through a similar process, the green light emitting diode 3046 and the blue light emitting diode 3047 also emit the light in green and the light in blue similarly while the electric current converted by a microwave converting unit 3021 and a microwave converting unit 3022 is supplied.

The display unit 3040 has an area of about 20 mega x 20 mega.

In this way, based on control by the electric power transmitting device 400, each display device in the plurality of display devices constituting the display emits light in an arbitrary color for determined time. Accordingly, since the single display device 5000 emits light in red, green and blue, a flexible display can be produced.

As stated, since a color of an emitted light issued by any display device 5000 among the plurality of display devices 5000 is not a fixed color, and the color is an arbitrary color based on control by the control unit 480, a flexible display method with high variation display representation becomes possible.

Particularly, the above display device does not require the battery and the charger, and does not need the electric power source. Therefore, construction works of the electric power source for the display are not required. Therefore, it is possible to supply the electric power to a place where wiring of the electric power is physically impossible and a place where wiring of the electric power is physically dangerous. For example, by using the above display device which does not require wiring, the electric power can be supplied to a complex, a tanker, etc. using the microwave, the complex, the tanker, etc. can become objects of the display.

Therefore, it is possible to display at an arbitrary place (for example, a place without the electric power and an infrastructure), a wall, a cliff, a water surface, etc. without wiring.

Further, since the above display device is very thin, by forming the display device in a patch shape and stickerizing a backside of the patch, a detachable display can be created easily at any place and any space. Therefore, by using this display, a simple display, an advertisement, a neon sign, an illumination, etc. can be produced at a wall of a building, a body of a car, and each event place where it has been impossible or difficult to create the display so far. Therefore, a high advertisement effect can be expected by new advertisement according to this embodiment.

As a method for radiating a directional beam to the display device 5000 by the electric power transmitting device 400, there are a method of narrowing a microwave beam itself transmitted by the electric power transmitting device 400 and a method of masking the microwave beam transmitted by the electric power transmitting device 400 using a mask board.

### Embodiment 4.

In this embodiment, a traffic safety system using a traffic sign, etc. at night is explained.

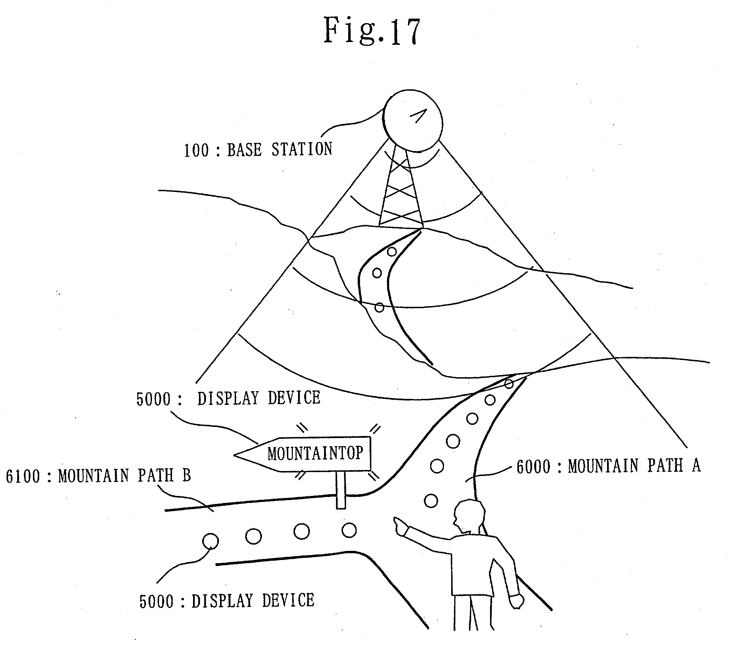

Fig. 17 illustrates a traffic safety system using the display device 5000. The base station 100 is a station which transmits the microwave. The base station 100 is an example of the electric power transmitting device.

When a person descending a mountain arrives at a junction of a path after sunset, the person sometimes wonders which direction the person should chose to descend the mountain.

In Fig. 17, light of the display device 5000 which receives the microwave transmitted from the base station 100, converts the microwave directly into the electric current, and emits light indicates a direction of a mountaintop. Similarly, light of the display device 5000 which converts the microwave supplied by the base station 100 directly into the electric current and emits light indicates a route of a mountain path A 6000 and a mountain path B 6100.

The person descending the mountain who has arrived at the junction of the path selects the mountain path A 6000 which is a descending path instead of selecting the mountain path B 6100 for going to the mountaintop according to an instruction of these display devices 5000.

As stated, by lighting a display light using the batteryless display device 5000 as a traffic display means at night, the traffic safety at night can be achieved.

In this embodiment, it is possible to add a function as a guide light to the base station 100 illustrated in Fig. 17. Specifically, mountain paths used by climbers are registered in the base station 100 in advance. Further, a transmitting antenna with directionality is set in the base station 100. The transmitting antenna in the base station 100 transmits the microwave to an appropriate display device 5000 to guide the climbers to the mountain paths registered in the base station 100. Since only the display device 5000 to which the microwave is transmitted emits light, the climbers can be guided to a determined mountain path.

Further, it is also possible to achieve safety of the climber in a way that the display device 5000 at a descending path turns on so as to guide the climber only to the descending path or in a way that the display device 5000 at a dangerous path emits the light in red and the display device at a safe path emits the light in green so as to guide the climber to the safe path.

As stated, by using the batteryless display device 5000 which does not require changing of the battery and charging of the charger as a display light and a guide light, it is possible to avoid an undisplayable state due to running down of the battery unlike the related art. It is possible to guide safely and accurately.

### Embodiment 5.

In this embodiment, an electric power supply system in a building is explained.

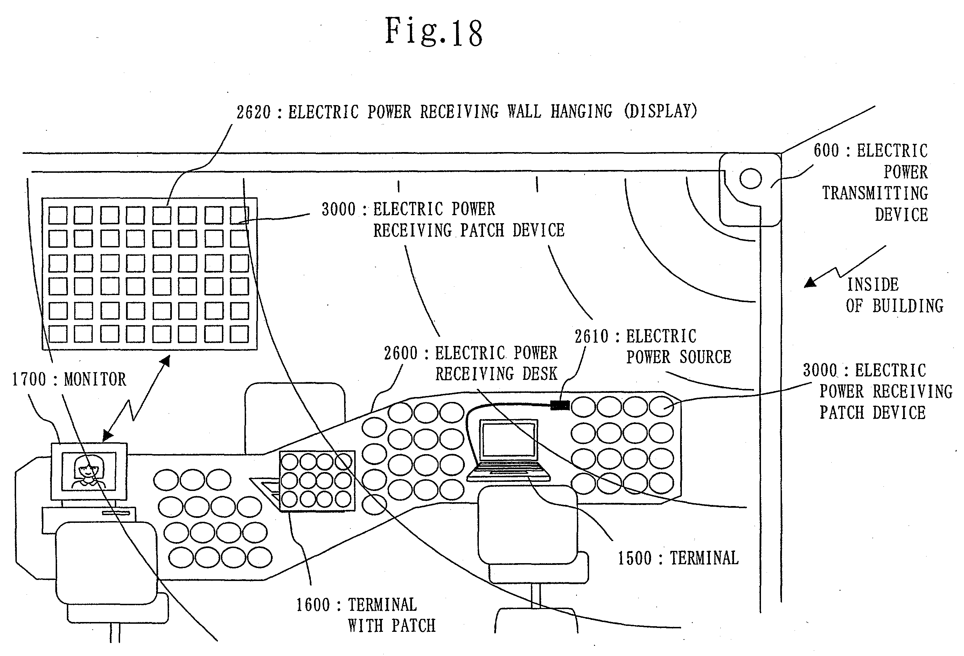

Fig. 18 shows the electric power supply system in the building.

An electric power transmitting device 600 transmits the microwave. The microwave transmitted is received by an electric power receiving desk 2600 in a surface of which the electric power receiving patch device 3000 is embedded, and converted directly into electric power energy. The electric power energy converted is supplied to a terminal 1500 by cable through an electric power source 2610 provided in the electric power receiving desk 2600. The terminal 1500 operates using the electric power energy supplied. When the terminal 1500 is connected to the electric power receiving desk 2600 by radio, the terminal also operates by being supplied with the electric power energy converted.

A terminal with patch 1600 is a terminal with a patch, where a plurality of electric power receiving patch devices 3000 is embedded in or stuck on a backside of the display. The terminal with patch 1600 converts the microwave transmitted from the electric power transmitting device 600 directly into the electric current, and operates using the electric power.

An electric power receiving wall hanging 2620 is a wall hanging where a plurality of electric power receiving patch devices 3000 is arranged. The plurality of electric power receiving patch devices 3000 attached to the electric power receiving wall hanging 2620 converts the microwave into the electric current, and supplies the electric current obtained to electronic equipment such as a monitor 1700 by radio. Accordingly, the monitor 1700 can operate.

The electric power receiving wall hanging 2620 can function as a display by replacing the electric power receiving patch device 3000 illustrated in the figure with a single or a plurality of display devices having a function of emitting light and arranging the single or the plurality of display devices in a desired way.

The above electric power receiving desk 2600, the terminal with patch 1600, the electric power receiving wall hanging (display) 2620 are examples of batteryless electronic equipment.

By using the above batteryless electronic equipment in a restricted area which a person cannot approach, the above electronic equipment can be used effectively as an electric power supply system to the restricted area which the person cannot approach.

### Embodiment 6.

In this embodiment, an electric power supply system using the receiving patch antenna which acquires solar light and the microwave is explained.

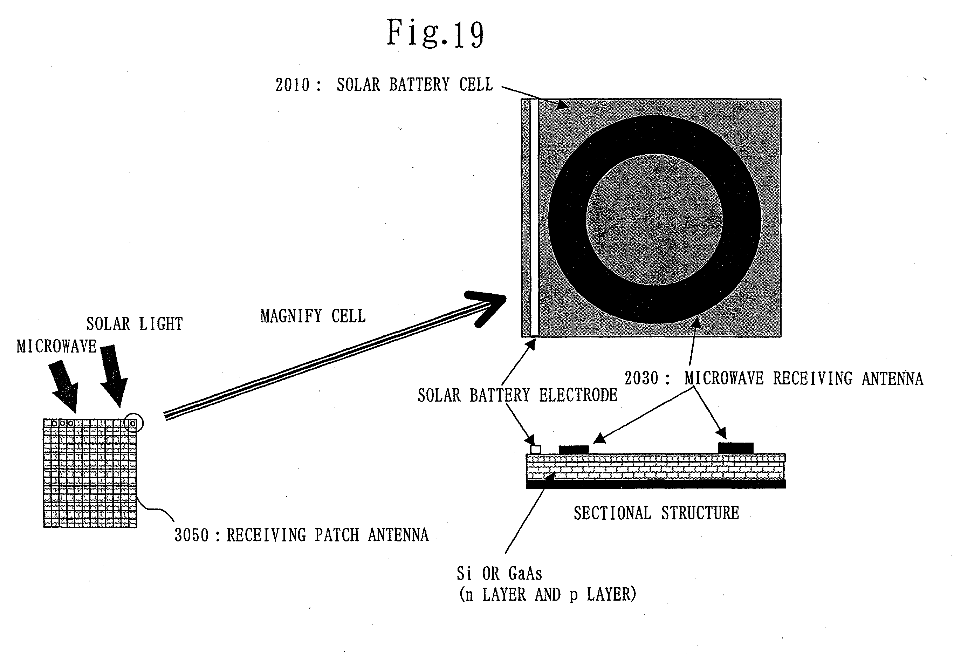

Fig. 19 is a configuration chart of the receiving patch antenna 3050 which acquires the solar light and the microwave.

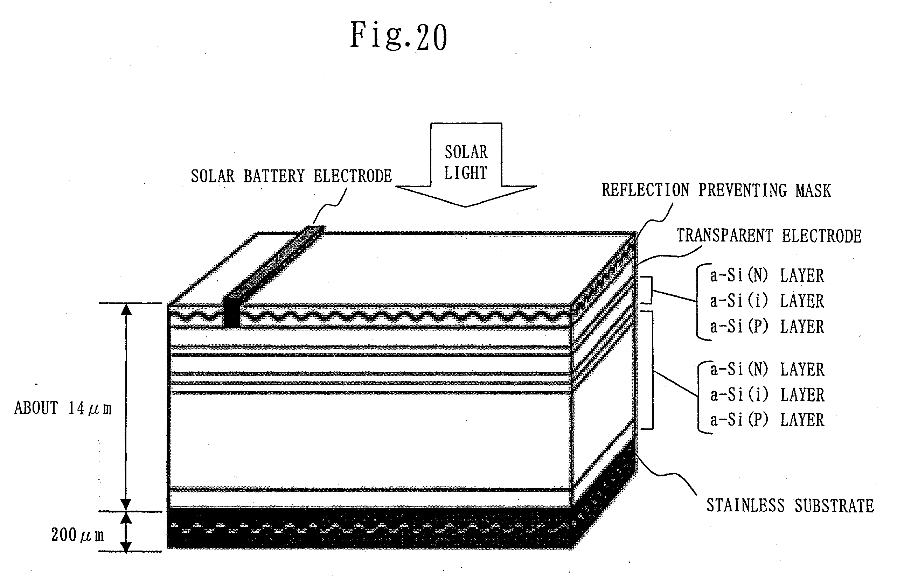

The receiving patch antenna 3050 includes a single or a plurality of cells. In the figure, the receiving patch antenna 3050 including the plurality of cells is illustrated. The cell includes a solar battery cell 2010, a microwave receiving antenna 2030, and a solar battery electrode. The solar battery cell 2010 is a battery which acquires the solar light and converts solar light energy into the electric current. The solar battery cell 2010 includes Si or GaAs, etc. Fig. 20 illustrates a structure of the solar battery cell 2010. The solar light is absorbed by a reflection preventing film, and the solar light absorbed is converted into the electric current by layers having N layer and P layer structure. The electric current converted is taken out using the solar battery electrode.

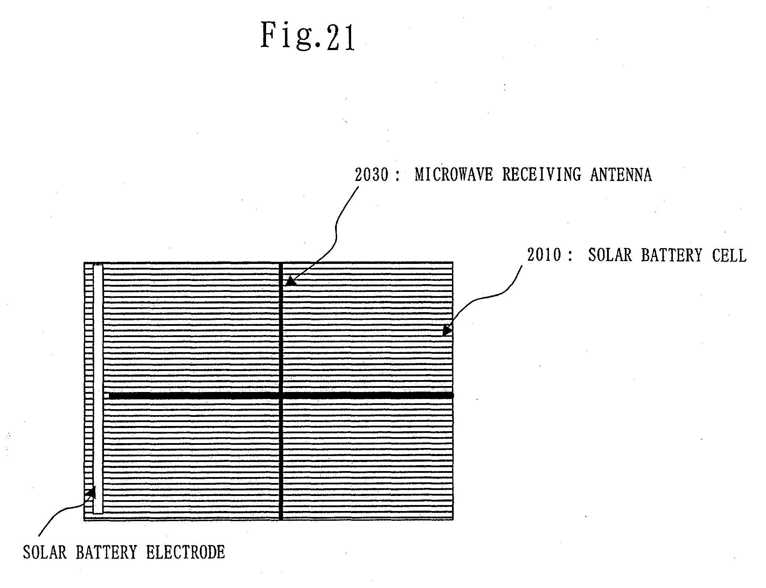

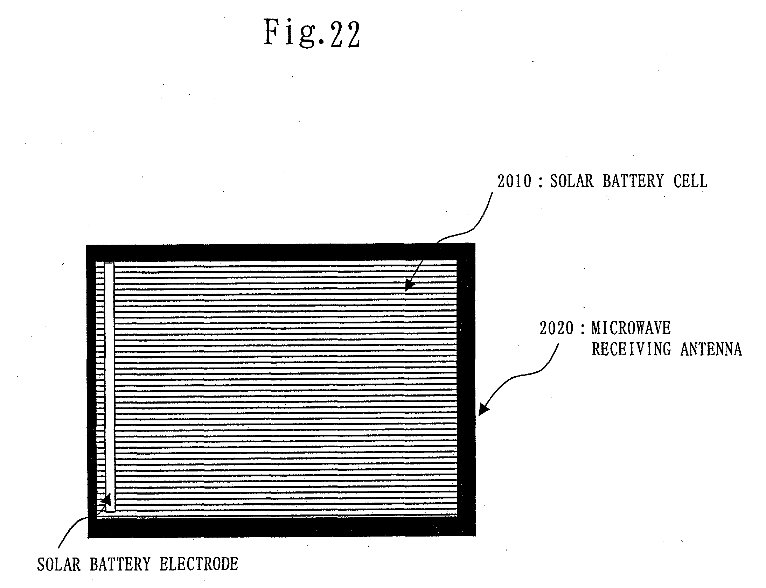

The microwave receiving antenna 2030 in Fig. 19 is an antenna which acquires the microwave. A pattern of the microwave receiving antenna 2030 can be a cross shape as illustrated in Fig. 21 and a frame shape as illustrated in Fig. 22 besides a donut shape.

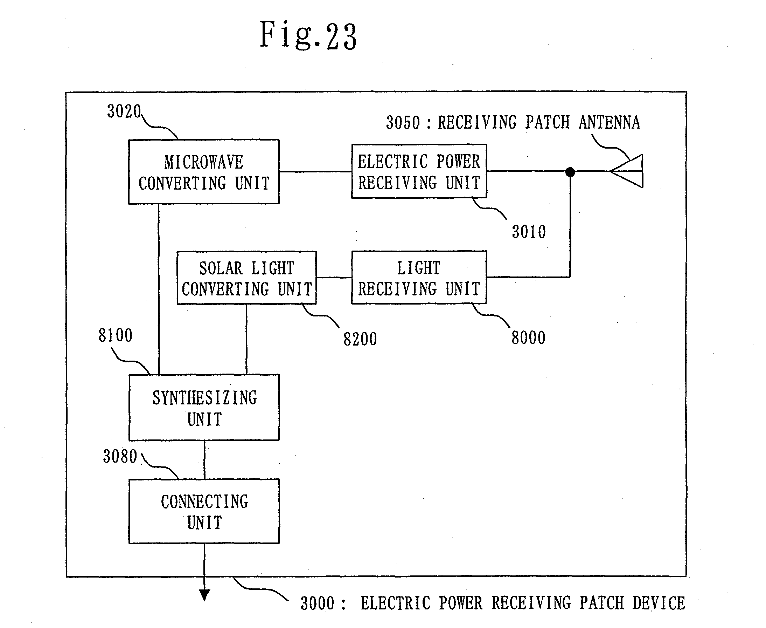

Fig. 23 shows an internal configuration chart of the electric power receiving patch device 3000 which converts the solar light and the microwave directly into the electric current.

In the electric power receiving patch device 3000, a light receiving unit 8000, a solar light converting unit 8200, and a synthesizing unit 8100 are added to the electric power receiving patch device illustrated in Fig. 4.

The light receiving unit 8000 receives the solar light. The solar light converting unit 8200 converts the solar light energy received into the electric current. The synthesizing unit 8100 switches to synthesize the electric current converted by the solar light converting unit 8200 and the electric current converted from the microwave by the microwave converting unit.

By using the receiving patch device 3000 according to this embodiment, which converts the solar light energy and the microwave energy directly into the electric current, an electric power supply system for outputting high energy can be configured.

Further, according to the receiving patch device 3000 of this embodiment, when it is sunny during the daytime, the sun is used as the electric power supply source, and on a rainy day or during the nighttime, the microwave is used as the electric power supply source for the electric power receiving patch device 3000. Accordingly, the electric power source in nature can be utilized effectively by supplementing each other.

Further, by adding the light emitting diode to the electric power receiving patch device 3000 described in this embodiment, the display device 5000 which emits light using both the electric current converted from the solar light and the electric current converted from the microwave can be produced.

In the batteryless society described in all of the above embodiments, the energy source to be converted directly is not limited to the microwave. It is possible to use a particular electromagnetic wave such as infrared rays as the energy source.

Further, the energy which is an object of conversion includes all kinds of energy such as the solar light energy, geothermal energy, and ocean energy. Industrial Applicability

According to preferred embodiments of this invention, regarding the electromagnetic wave transmitted through space, by converting the electromagnetic wave directly into the energy and using the energy converted directly, it is possible to promote the batteryless electronic equipment.

Further, by realizing the batteryless electronic equipment, the size and the weight of the equipment can be reduced, and it is possible to accelerate further improvement of IT.

Further, by realizing the batteryless electronic equipment, a completely new electric product, infrastructure, and service can be created. Hence, new demand can be created.

## Claims

1. An electric power receiving device comprising:
an electric power receiving unit for receiving a microwave;
a microwave converting unit for converting the microwave received by the above electric power receiving unit into an electric current; and
a connecting unit connected to other equipment, for supplying the electric current converted by the above microwave converting unit to the other equipment connected.

2. The electric power receiving device as described in claim 1, wherein the above connecting unit is connected mutually detachable and the above electric power receiving device is arranged in an array.

3. The electric power receiving device as described in claim 1, further comprising a transmitting unit for transmitting information using the electric current converted by the above microwave converting unit.

4. The electric power receiving device as described in claim 1, further comprising:
a storing unit for storing identification information; and
an electric current converting unit for converting the identification information stored in the above storing unit into a microwave using the electric current converted by the above microwave converting unit,
wherein the above transmitting unit transmits the microwave converted by the above electric current converting unit using the electric current converted by the above microwave converting unit.

5. A display device comprising:
an electric power receiving unit for receiving a microwave;
a microwave converting unit for converting the microwave received by the above electric power receiving unit into an electric current;
a light emitting diode for emitting light using the electric current; and
a display unit for making the above light emitting diode emit light using the electric current converted by the above microwave converting unit.

6. The display device as described in claim 5, further comprising a frequency filter for allowing a passage of the microwave at a determined frequency in microwaves received by the above electric power receiving unit,
wherein the above microwave converting unit converts the microwave passed through the above frequency filter into an electric current.

7. The display device as described in claim 5, comprising:
a plurality of frequency filters; and
a plurality of light emitting diodes for emitting light in various colors,
wherein each frequency filter in the above plurality of frequency filters allows a passage of a microwave at a determined frequency set for each frequency filter in the microwaves received by the above electric power receiving unit,
wherein the above microwave converting unit converts the microwave passed through each frequency filter in the above plurality of frequency filters into an electric current,
wherein the above display unit makes a light emitting diode corresponding to a frequency of the microwave passed through the above each frequency filter in the above plurality of light emitting diodes emit light using the electric current converted by the above microwave converting unit.

8. A receiving antenna comprising:
a solar battery cell for acquiring solar light from energy input; and
a microwave receiving antenna for acquiring a microwave from the energy input.

9. An electric power receiving device comprising:
a receiving antenna for acquiring a microwave and solar light;
an electric power receiving unit for receiving the microwave acquired by the above receiving antenna;
a light receiving unit for receiving the solar light acquired by the above receiving antenna;
a microwave converting unit for converting the microwave received by the above electric power receiving unit into an electric current; and
a solar light converting unit for converting the solar light received by the above light receiving unit into an electric current.

10. An electric power supply system comprising:
an electric power transmitting device including an energy converting unit for converting energy into a microwave and an electric power transmitting unit for transmitting the microwave converted by the above energy converting unit; and
an electric power receiving device including an electric power receiving unit for receiving the microwave transmitted by the above electric power transmitting unit, a microwave converting unit for converting the microwave received by the above electric power receiving unit into an electric current, and a connecting unit connected to other equipment, for supplying the electric current converted by the above microwave converting unit to the other equipment connected.

11. A display system comprising:
an electric power transmitting device including a display control unit for controlling a request for outputting a microwave, an energy converting unit for converting energy into a microwave based on the request for outputting the microwave controlled by the above display control unit, and an electric power transmitting unit for transmitting the microwave converted by the above energy converting unit; and
a display device including an electric power receiving unit for receiving the microwave transmitted by the above electric power transmitting unit, a microwave converting unit for converting the microwave received by the above electric power receiving unit into an electric current, a light emitting diode for emitting light using the electric current, and a display unit for making the above light emitting diode emit light using the electric current converted by the above microwave converting unit.

12. An electric power supply system comprising:
an electric power transmitting device including an energy converting unit for converting energy into a microwave, and an electric power transmitting unit for transmitting the microwave converted by the above energy converting unit; and
an electric power receiving device including a receiving patch antenna for acquiring the microwave transmitted by the above electric power transmitting unit and solar light which is natural light, an electric power receiving unit for receiving the microwave acquired by the above receiving patch antenna, a light receiving unit for receiving the solar light acquired by the receiving patch antenna, a microwave converting unit for converting the microwave received by the electric power receiving unit into an electric current, and a solar light converting unit for converting the solar light received by the light receiving unit into an electric current.

13. An electric power receiving method comprising:
receiving a microwave;
converting the above microwave received into an electric current; and
by being connected to other equipment, supplying the electric current converted by the above microwave converting unit to the other equipment connected.
